# EUROPEAN PATENT SPECIFICATION

(11) **EP 0 677 354 B1**
(45) Date of publication and mention of the grant of the patent: **28.01.1998**
(21) Application number: 95105187.9
(22) Date of filing: 06.04.1995
(51) Int. Cl.: B23K 11/00

(54) **Method for manufacturing, by capacitor-discharge welding, metal-plate radiator elements for domestic heating systems**
Kondensatorentladungsschweissen von Heizröhren, die aus Metallblech gefertigt werden
Fabrication de radiateurs en tôle par soudage par décharge capacitive

(30) Priority: 14.04.1994 IT TO940287
(43) Date of publication of application: 18.10.1995
(73) Proprietor: T.D.A. TECNOLOGIE D'AUTOMAZIONE S.r.l., 12080 Pianfei (Cuneo) (IT)
(72) Inventor: Parpaiola,Pier Antonio, I-10090 Alpignano(Prov.of Torino) (IT); Gubbini,Amulio, I-10080 San Benigno Canavese (Torino) (IT); Rupp,Guido, D-45139 Essen (DE); Schlemmer,Manfred, D-45133 Essen (DE)
(74) Representative: Modiano, Guido, Dr.-Ing.

(56) References cited:
- GB-A- 2 106 321
- NL-A- 39 851
- US-A- 2 011 121

## Description

The present invention relates to a method for manufacturing radiator elements made of welded metal plate for domestic heating systems.

Radiators made of metal plate and formed by a plurality of elements, each of which is constituted by two heads between which multiple pipes are interposed, are known.

In such radiators, the heads of the individual radiator elements are formed by two symmetrical half-shells made of stamped plate which are juxtaposed and mutually connected by perimetric welding; said heads are provided with a series of cylindrical fittings to which the pipes interposed between said heads are connected, again by welding.

Such individual radiator elements are currently obtained by using expensive and scarcely efficient manufacturing methods entailing several drawbacks. Known manufacturing methods in fact typically use resistance welding systems of the flashing type that form raised welding beads and accordingly force additional manufacturing steps to eliminate said raised beads by abrasion. Furthermore, in order to perform these welds correctly it is necessary to achieve accurate mutual positioning of the elements to be welded, to gauge the cylindrical fittings of the heads and of the pipes, and to center the axis of the pipes correctly with respect to the axis of the fittings of both heads; all these operations entail considerable manufacturing downtimes and the intervention of specialized operators.

A principal aim of the present invention is essentially to eliminate these and other drawbacks of known manufacturing methods, by providing a manufacturing method that does not require any additional manufacturing step and eliminates downtimes linked to the correct mutual positioning of the components to be welded.

Another important object of the present invention is to provide a manufacturing method for obtaining radiator elements that are improved both structurally and aesthetically and, from this latter point of view, are essentially usable after simply painting them.

According to the invention, this aim, these important objects, and others are achieved with a method having the features defined in claim 1.

Essentially, the invention is based on the concept of assembling the individual parts that compose each radiator element by capacitor-discharge welding, performed by means of discharge electrodes that simultaneously act as elements for retaining and mutually positioning said components. Based on this essential concept, the invention comprises a first step for manufacturing the heads, which consists in positioning the half-shells of the heads inside respective electrodes, in which corresponding retention and centering recesses for said half-shells are formed; in placing said electrodes, containing the half-shells, close to each other, leaving a dielectric gap therebetween; and in subjecting said electrodes to a capacitor discharge by connecting them to the respective poles of a capacitor-discharge current source. The discharge produces the perimetric welding of the half-shells without forming raised beads or other surface imperfections, so that when the discharge has occurred the electrodes are opened and the finished head is removed.

A subsequent production step consists in placing a head, obtained by the previous production step, inside a corresponding first openable electrode in which a recess is formed to retain and center said head, and in positioning the pipes to be connected to the head inside a second electrode, which is also openable and is provided with recesses for retaining and centering said pipes. The first and the second electrodes are then connected to the respective poles of the capacitor-discharge current source and are subjected to the discharge of said source, which welds the pipes to the corresponding fittings of the head.

In a third and final step of the method, the second head is welded to the free end of the pipes in a manner that is fully identical to the one described above.

As an alternative, the third step can be eliminated and both heads can be welded to the pipes simultaneously during the second step of said method.

The method according to the invention is now described in detail with reference to the accompanying drawings, provided by way of non-limitative example and wherein:
figure 1 is a perspective view of a radiator element made of metal plate, obtained with the method according to the invention;
figures 1a, 1b, and 1c illustrate the production sequences for performing the first step of the method for manufacturing the radiator element of figure 1;
figure 2 is a block diagram of the capacitor-discharge welding means with electrodes for manufacturing the heads of the radiator element of figure 1;
figure 3 is a block diagram, similar to figure 2, of the capacitor-discharge welding means for performing the second step and optionally the third step of the manufacturing method according to the invention to obtain the element of figure 1.

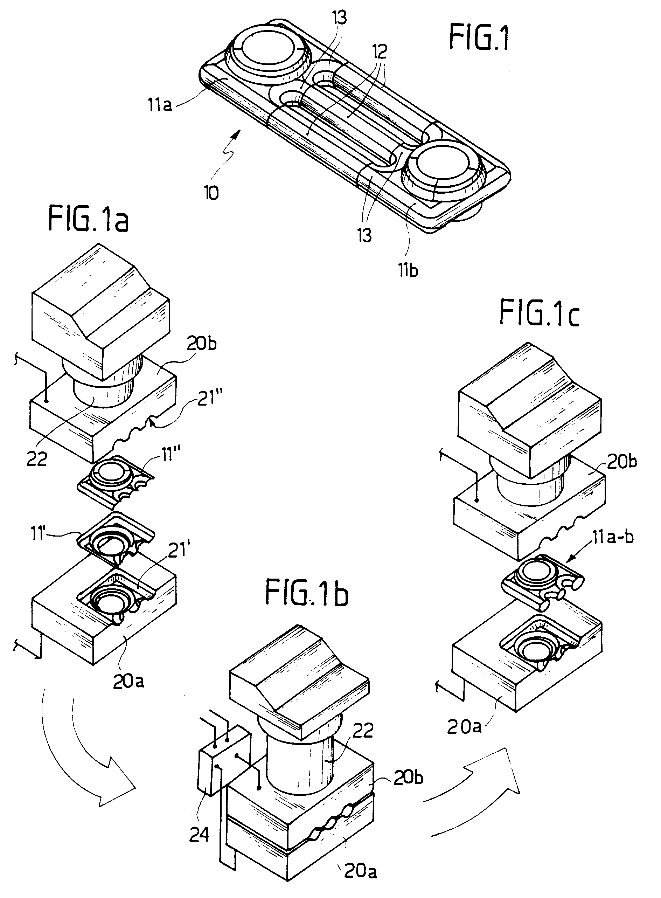

In figure 1, the reference numeral 10 generally designates the radiator element made of metal plate, which comprises two heads 11a, 11b oppositely arranged and connected by multiple pipes 12 interposed between said heads. Each head is formed by two half-shells 11', 11'' which are juxtaposed and welded perimetrically, and is provided with fittings 13 for connecting the pipes 12.

In figures 1a to 1c, the reference numerals 20a and 20b designate two welding electrodes made of metal or metallic alloys with high electric and thermal conductivity, typically copper or stainless steel. Each electrode has a respective recess 21', 21'' that accommodates, for centering and retention purposes, the corresponding half-shell 11', 11'' made of stamped metal plate that forms the head 11a of the radiator element 10.

A movable supporting system, constituted for example by a pneumatic or hydraulic jack 22, allows to superimpose the two electrodes, containing the respective half-shells 11', 11'' close to each other.

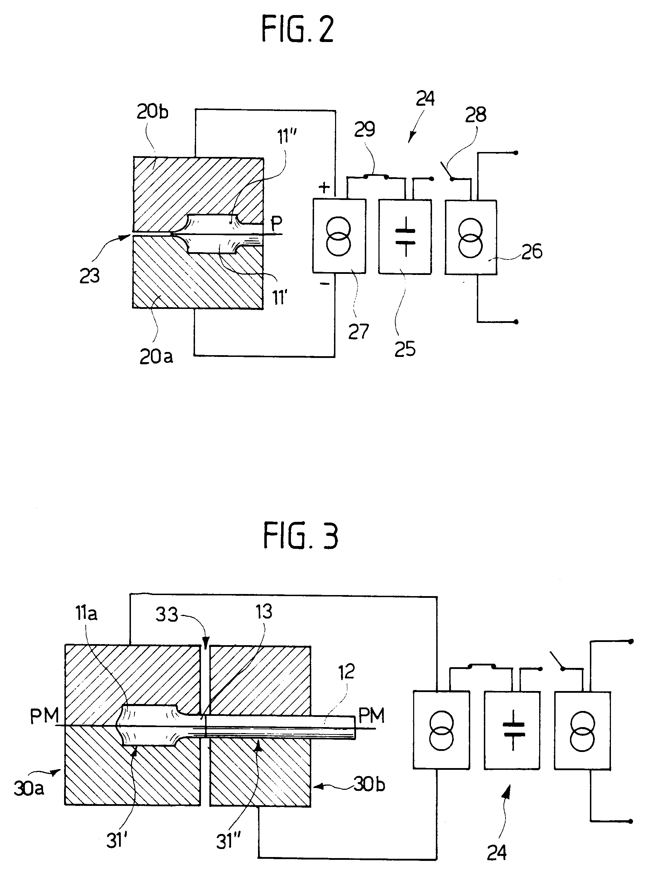

As clearly shown in figure 2, once the electrodes 20a and 20b have been positioned close to each other, the half-shells 11',11'' are juxtaposed along the perimetric line P, whereas a dielectric gap 23 is left between the two electrodes. In figure 1b, the superimposed electrodes, containing the half-shells 11', 11'', are subjected to the discharge of the capacitor-discharge current source, generally designated by the reference numeral 24. Said per se known source comprises (figure 2) at least one high-capacity capacitor 25, typically a battery of capacitors, a voltage transformer (step-up transformer) 26 for charging the capacitor or capacitors, a current transformer 27 for discharging the capacitor or capacitors onto the electrodes 20a, 20b, and switching means 28, 29 for selectively connecting the transformer 26 to the capacitor or battery of capacitors 25 and respectively connecting the capacitor or battery of capacitors 25 to the discharge transformer 27.

The discharge current of the capacitor 25, amplified by the transformer 27, acts on the electrodes 20a, 20b and welds the half-shells 11', 11'' along the perimetric line P; said welding is characterized by the absence of raised beads of added material, so that the head 11a has no discontinuities in the welding area. Once the discharge has occurred, the electrodes 20a, 20b are opened as shown in figure 1 to remove the finished head 11.

In the subsequent manufacturing step, shown in figure 3, a head 11a, obtained by means of the previous manufacturing step, is placed in a first openable electrode 30a formed by two half-electrodes that are mutually adjacent along a central plane PM; said electrode has a recess 31' for containing and retaining the head 11a. The dimensions of the electrode 30a allow the end portions of the fittings 13 of the head 11a to protrude from said electrode to couple to the corresponding heads of the pipes 12 to be welded to said fittings.

As clearly shown in the figure, the pipes 12 are in turn contained in the respective recesses 31'' of a second adjacent electrode 30b which is also openable and is formed by two half-electrodes that are mutually adjacent along the central plane PM containing the axes of the pipes 12. A dielectric gap 33 is left between the electrodes 30a, 30b, and said electrodes are connected to the respective poles of the capacitor-discharge source 24 described above and are subjected to the discharge of said source, which welds the pipes 12 to the fittings 13 without adding material and therefore entirely without producing welding beads or other surface discontinuities in the region where said fittings and said pipes join.

Once the discharge has ended, the electrodes 30a,30b are opened to remove the head 11a and the pipes 12 connected thereto, and the second head 11b is inserted into the electrode 30a; said second head is connected to the free end of the pipes 12 by means of the second electrode 30b in a manner that is fully similar to the one already described.

The radiator element 10 obtained with the described manufacturing method requires no additional manufacturing steps, since it is characterized by the complete lack of added material along the welding seams and is thus immediately usable after simply painting it, for example by electrophoresis or with other appropriate systems.

The details of the execution of the method and the embodiments of the radiator element can of course be modified extensively, with respect to what has been described and illustrated by way of non-limitative example, without altering the concept of the invention and without thereby abandoning the scope of the invention defined in the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Method for manufacturing metal plate radiators for domestic heating systems that comprise a plurality of radiator elements (10), each radiator element being formed by two heads (11a,11b) connected by multiple pipes (12), said heads being formed by respective juxtaposed half-shells (11',11'') and being provided with fittings for connecting said multiple pipes (12); characterized in that it comprises a first step for connecting the half-shells (11',11'') and for forming each head, and a second step for connecting the pipes to the fittings of the head and for forming the radiator element; both steps being performed by capacitor-discharge welding by means of respective electrodes (20a,20b ; 30a,30b) that simultaneously act as elements for retaining and mutually positioning the elements to be welded.

2. Method according to claim 1, characterized in that the first step for forming the heads consists in positioning the half-shells (11',11'') of the head inside respective electrodes (20a,20b) which are provided with corresponding recesses (21',21'') for retaining and containing said half-shells; in placing said electrodes (20a,20b) containing the half-shells, mutually adjacent, leaving a dielectric gap (23) therebetween; in subjecting said electrodes to a capacitor discharge by connecting them to the respective poles of a capacitor-discharge current source (24); and in opening the electrodes to remove the formed head (11a,11b).

3. Method according to claim 1, characterized in that the second step for connecting the pipes (12) to each head (11a,11b) consists in placing the first head (11a) into a corresponding first openable electrode (30a), in which a recess (31') is formed for retaining and centering said head; in positioning the pipes (12) in a corresponding second openable electrode (30b), arranged adjacent to the first one, so that the heads of the pipes (12) are aligned with the corresponding fittings (13) of the head (11a) and so that a dielectric gap (33) is formed between the two electrodes; in subjecting said first and second electrodes to a capacitor discharge, connecting them to the poles of a capacitor-discharge current source (24); in opening the electrodes and removing the head and the connected pipes; in replacing the head (11a) removed from the first electrode (30a) with the second head (11b) to be connected; and in performing the capacitor-discharge welding of the free ends of the pipes (12) to the fittings (13) of said second head.

4. Method according to claims 1 to 3, characterized in that the current applied to the electrodes is produced by a capacitor-discharge source (24) comprising at least one capacitor (25), a step-up transformer (26) for charging the capacitor, a current transformer (27) for discharging the capacitor, and switching means (28,29) for selectively connecting the charging transformer to the capacitor or for connecting the capacitor to the welding electrodes.

## Patentansprüche

1. Verfahren zum Herstellen von Heizkörpern aus Metallplatten für Haushaltsheizsysteme, die eine Vielzahl von Heizkörperelementen (10) aufweisen, wobei jedes Heizkörperelement aus zwei Köpfen (11a,11b) gebildet ist, die durch mehrere Röhren (12) miteinander verbunden sind, wobei die Köpfe durch jeweilige aneinandergrenzende Gahäusehälften (11', 11'') gebildet werden und mit Fittingen zum Verbinden der mehreren Röhren (12) versehen sind, dadurch gekennzeichnet, daß es einen ersten Schritt zum Verbinden der Gehäusehalften (11',11'') und zum Bilden jedes Kopfes und einen zweiten Schritt zum Verbinden der Röhren mit den Fittingen des Kopfes und zum Bilden des Heizkörperelements aufweist, wobei beide Schritte durch Kondensatorentladungsschweißen mit Hilfe jeweiliger Elektroden (20a,20b; 30a,30b), die gleichzeitig als Elemente zum Halten und Aneinanderanordnen der zu verschweißenden Elemente dienen, durchgeführt werden.

2. Verfahren nach Anspruch 1, dadurch gekennzeichnet, daß der erste Schritt zum Bilden des Kopfes darin besteht, die Gehäusehälften (11',11'') des Kopfes innerhalb jeweiliger Elektroden (20a,20b), die mit entsprechenden Ausnehmungen (21',21'') zum Halten und Einschließen der Gehäusehälften versehen sind, anzuordnen, die Elektroden (20a,20b), die die Gehäusehälften einschließen, aneinander angrenzend anzuordnen, wobei ein dielektrischer Spalt (23) zwischen ihnen freigelassen wird, die Elektroden einer Kondensatorentladung zu unterziehen, indem sie mit den jeweiligen Polen einer Kondensatorentladungsstromquelle (24) verbunden werden, und die Elektroden zu öffnen, um den gebildeten Kopf (11a,11b) herauszunehmen.

3. Verfahren nach Anspruch 1, dadurch gekennzeichnet, daß der zweite Schritt zum Verbinden der Röhren (12) mit jedem Kopf (11a,11b) darin besteht, den ersten Kopf (11a) in eine entsprechende erste Elektrode (30a), die geöffnet werden kann und in der eine Ausparung (31') zum Halten und Zentrieren des Kopfes ausgebildet ist, einzusetzen, die Röhren (12) in einer entsprechenden zweiten Elektrode (30b) anzuordnen, welche geöffnet werden kann und angrenzend an die erste angeordnet ist, so daß die Köpfe der Röhren (12) mit den entsprechenden Fittingen (13) des Kopfes (11a) ausgerichtet sind und so daß ein dielektrischer Spalt (33) zwischen den beiden Elektroden ausgebildet wird, die ersten und zweiten Elektroden einer Kondensatorentladung zu unterziehen, wobei sie mit den Polen einer Kondensatorentladungsstromquelle (24) verbunden werden, die Elektroden zu öffnen und den Kopf und die verbundenen Röhren herauszunehmen, den Kopf (11a), der aus der ersten Elektrode (30a) herausgenommen wurde, durch den zweiten zu verbindenden Kopf (11b) zu ersetzen und eine Kondensatorentladungsschweißung der freien Enden der Röhren (12) mit den Fittingen (13) des zweiten Kopfes durchzuführen.

4. Verfahren nach den Ansprüchen 1 bis 3, dadurch gekennzeichnet, daß der Strom, der an die Elektroden angelegt wird, durch eine Kondensatorentladungsquelle (24) erzeugt wird, die zumindest einen Kondensator (25), einen Aufwärtstransformator (26) zum Aufladen des Kondensators, einen Stromtransformator (27) zum Entladen des Kondensators und Schaltmittel (28,29) zum wechselweisen Verbinden des Aufladungstransformators mit dem Kondensator oder zum Verbinden des Kondensators mit den Schweißelektroden aufweist.

## Revendications

1. Procédé pour fabriquer des radiateurs à plaque métallique pour des systèmes de chauffage domestiques qui comprennent une pluralité d'éléments de radiateur (10), chaque élément de radiateur étant formé par deux têtes (11a, 11b) reliées par de multiples tubes (12), lesdites têtes étant formées de demi-coquilles (11', 11'') respectivement juxtaposées et dotées de raccords pour connecter lesdits tubes multiples (12); caractérisé en ce qu'il comprend une première étape pour connecter les demi-coquilles (11', 12'') et pour former chaque tête et une deuxième étape pour connecter les tubes aux raccords de la tête et pour former l'élément de radiateur; les deux étapes étant réalisées par soudage à décharge capacitive au moyen d'électrodes respectives (20a, 20b; 30a, 30b) qui agissent simultanément comme éléments pour retenir et positionner mutuellement les éléments à souder.

2. Procédé selon la revendication 1, caractérisé en ce que la première étape pour former les têtes consiste à positionner les demi-coquilles (11', 11'') de la tête à l'intérieur des électrodes respectives (20a, 20b) qui sont munies de cavités correspondantes (21', 21'') pour retenir et contenir lesdites demi-coquilles; à placer lesdites électrodes (20a, 20b) contenant les demi-coquilles de manière mutuellement adjacente en laissant un intervalle diélectrique (23) entre elles; à soumettre lesdites électrodes à une décharge capacitive en les connectant aux pôles respectifs d'une source de courant à décharge capacitive (24); et à ouvrir les électrodes pour enlever la tête réalisée (11a, 11b).

3. Procédé selon la revendication 1, caractérisé en ce que la deuxième étape pour connecter les tubes (12) à chaque tête (11a, 11b) consiste à placer la première tête (11a) dans une première électrode ouvrable correspondante (30a), dans laquelle une cavité (31') est formée pour retenir et centrer ladite tête; à positionner les tubes (12) dans une deuxième électrode ouvrable correspondante (30b), agencée de manière adjacente à la première, de telle sorte que les têtes des tubes (12) soient alignées avec les raccords correspondants (13) de la tête (11a) et de sorte qu'un intervalle diélectrique (33) soit formé entre les deux électrodes; à soumettre lesdites première et deuxième électrodes une décharge capacitive en les connectant aux pôles d'une source de courant à décharge capacitive (24); à ouvrir les électrodes et à enlever la tête et les tubes reliés; à replacer la tête (11a) enlevée de la première électrode (30a) sur la deuxième tête (11b) à connecter: et à réaliser la soudure par décharge capacitive des extrémités libres des tubes (12) aux raccords (13) de ladite deuxième tête.

4. Procédé selon les revendications 1 à 3 caractérisé en ce que le courant appliqué aux électrodes est produit par une source à décharge capacitive (24) comprenant au moins un condensateur (25), un transformateur élévateur de tension (26) pour charger le condensateur, un transformateur de courant (27) pour décharger le condensateur, et des moyens de commutation (28, 29) pour connecter sélectivement le transformateur de charge au condensateur ou pour connecter le condensateur aux électrodes de soudage.
